# EUROPEAN PATENT SPECIFICATION

(11) **EP 2 264 877 B1**
(45) Date of publication and mention of the grant of the patent: **23.04.2014**
(21) Application number: 09290463.0
(22) Date of filing: 18.06.2009
(51) Int. Cl.: H02M 1/15, G05F 1/565

(54) **Active filter for DC power supply**
Aktivfilter für eine Gleichstromversorgung
Filtre actif pour alimentation électrique CC

(43) Date of publication of application: 22.12.2010
(73) Proprietor: Alcatel Lucent, 75007 Paris (FR)
(72) Inventor: Glaser, Wolfgang, 70563 Stuttgart (DE)
(74) Representative: Vandenbroeck, Josiane Anne Marie

(56) References cited:
- US-A- 4 814 687
- US-A1- 2002 047 743
- US-A1- 2009 015 299
- KA NANG LEUNG ET AL: "Right-half-plane zero removal technique for low-voltage low-power nested Miller compensation CMOS amplifier" ELECTRONICS, CIRCUITS AND SYSTEMS, 1999. PROCEEDINGS OF ICECS '99. THE 6TH IEEE INTERNATIONAL CONFERENCE ON PAFOS, CYPRUS 5-8 SEPT. 1999, PISCATAWAY, NJ, USA,IEEE, US, vol. 2, 5 September 1999 (1999-09-05), pages 599-602, XP010361647 ISBN: 978-0-7803-5682-5

## Description

The present invention relates to an active filter for a DC power supply.

It is generally known that a Switch Mode Power Supply SMPS exhibit, by concept, more or less significant ripple and noise at its output. For a couple of applications this is not acceptable and additional filtering is required.

The present active filter should be preferably but not exclusively adapted to operate as a filter unit for a power supply to be used in a 900MHz power amplifier for a telecommunication base station.

An additional challenge is to change the output voltage of the DC power supply in short time frames (≤ 15µs) from 18V to 32V and back again. In this particular application, the required power is in the 250W range, corresponding to a needed current of about 8A @ 32V.

Finally, the ripple and noise requirements at the output should be of at least -70dBc.

A first solution for reducing this ripple and noise would be to add high quality capacitors, e.g. low Equivalent Series Resistances ESR ceramics, at the output.

However, beside increased cost and size considerations, this known solution is not suitable if the output voltage of the power supply has to be dynamically adjusted. Indeed, because of the above mentioned need to quickly change the output voltage of the power supply the then needed charging currents and related losses would be much too high.

A second possibility to reduce ripple and noise of such a DC power supply would be to use additional LC filtering. An L/C series filter works fine, also regarding efficiency losses, for applications with a more or less constant load current.

However, if the load current changes heavily, especially with variant frequencies, the LC filtering can cause problems and the result may even be worst than without this type of filtering.

Moreover, for the given application, this is absolutely not feasible because high dynamic load currents over a wide frequency range have to be considered. Crossing the L/C resonance ripple and noise will thereby actually increase instead of being reduced. This is due to the resonant frequency of this second order filter type (180° phase).

A third solution to get noise down could be to use an additional Low Drop Out linear regulator LDO connected in series.

This solution is only reasonable when the currents are in the sub 1A range. For higher currents the efficiency losses cause thermal problems to the system, beside any "green" considerations. Efficiency losses can approximatively be calculated to be of at least 2% (tolerance of the output of the power supply) PLUS 2% (tolerance of the LDO) PLUS the drop out voltage of the LDO, which result to about 0,2V or even higher. Further, the PSRR of LDO's is normally specified at 100kHz and often not above. Moreover, also this solution will only be feasible for one fixed voltage.

As an example, a realistic ±3% total voltage tolerance at the output of the power supply over line, load and temperature is assumed. Same applies for the linear regulator. Then, if the power supply is at its lower limit and the linear regulator at its upper limit, the losses are of 6%; without considering the additional needed headroom for the actuating power transistor inside the linear regulator circuitry. This means that, to get a nominal 18V output of the linear regulator, the nominal input voltage of it needs to be set to > 19,1V. Such features are not acceptable for the above given application; also regarding "green" requirements.

The present invention more particularly relates to an active filter for a DC power supply, having a filter input terminal coupled to an output of said DC power supply and comprising an active regulation device having main terminals coupled between said filter input terminal and a filter output terminal of said active filter, said active filter having said filter input terminal and a ground terminal across which said DC power supply is connected, said active regulation device being adapted to be controlled by an OPAMP controller circuit comprising an operational amplifier having a first regulation input connected to an attenuation output terminal of a floating reference voltage circuit, and having a second regulation input connected to said filter output terminal via a first resistor, said active regulation device being a MOSFET having a first main terminal coupled connected to said filter input terminal, a second main terminal connected to said filter output terminal, and a gate connected to an amplifier output of said OPAMP controller circuit, and said floating reference voltage circuit having an attenuation input terminal coupled to said filter input terminal and being adapted to provide a control voltage at said attenuation output terminal for said OPAMP controller circuit.

An object of the present invention is to provide an active filter for obtaining a power supply with extremely low ripple and noise accepting fast load current transients with varying frequency and fast variation of the DC power supply output while avoiding the drawbacks of the above mentioned solutions.

According to the invention, this object is achieved due to the fact that said amplifier output of said operational amplifier of said OPAMP controller circuit is connected back to said second regulation input via the series connection of a second resistor and a first capacitor.

The active filter is a kind of "floating LDO" provided in series with the output of the DC power supply. This active filter prevents efficiency losses caused by the tolerances of the power supply and by the "standard" Low Drop Out regulator LDO.

In more detail, the first resistor, the second resistor and the first capacitor define the proportional-integral characteristic of the OPAMP controller circuit comprising the operational amplifier. The first and the second resistor set the proportional part of the control loop of OPAMP, whereas the first capacitor with the second resistor set the integration constant.

With the nowadays-available high speed rail-to-rail OPerational AMPlifiers (OPAMP) and low RDS Field Effect Transistors (MOSFET) the present embodiment can be realized at a relatively moderated cost.

It is to be noted that the Patent Application US 2002/047743 A1 (OCHI SAM [US]) of 25 April 2002 and entitled "Active power filter for isolating electrically noisy load from low noise power supply" discloses an active power filter that includes a feedback resistor and a shunt capacitor, an operational amplifier equivalent subcircuit, and a voltage drop source. The shunt capacitor connects the positive terminals of the low noise power supply and the noisy load to the positive terminal of the operational amplifier equivalent subcircuit. The feedback resistor connects the negative terminal of the noisy load and the output of the operational amplifier equivalent subcircuit to the negative terminal of the shunt capacitor. The voltage drop source connects the negative terminal of the low noise power supply to the negative terminal of the operational amplifier equivalent subcircuit. The operational equivalent subcircuit includes an operational amplifier, three resistors, three capacitors, and a transistor. The first resistor connects the positive terminal of the voltage drop source to the negative input terminal of the operational amplifier. The second resistor connects the output of the operational amplifier to the gate of the transistor. The drain of the transistor is coupled to the negative terminal of the noisy load. The source of the transistor is coupled to the negative terminal of the voltage drop source and to the negative terminal of the low noise direct current power supply. The first capacitor connects the output of the operational amplifier to the negative input terminal of the operational amplifier. The second capacitor connects the output of the operational amplifier to the gate of the transistor. The third capacitor and a third resistor are connected in series between the gate of the transistor and the negative terminal of the low noise direct current power supply.

However, this known document do not disclose nor suggest an amplifier output connected back to a second regulation input via the series connection of a second resistor and a first capacitor in order to define the integration characteristic of an OPAMP controller circuit as in the present invention.

It is also to be noted that the Patent Application US 4 814 687 A (WALKER CHARLES S [US]) of 21 March 1989 and entitled "Following voltage/current regulator" discloses a following voltage/current regulator that includes a field effect transistor (FET) connected in series between an unregulated voltage source and a load, such as a motor bridge circuit. The conduction of the FET is controlled by a control circuit which measures the input voltage to the FET source, the output voltage from the FET drain and the current drawn by the load. Initially, when power is turned on, the inrush current to the load is limited until a predetermined voltage differential between the input and output voltages is achieved at steady state. Then, the voltage regulator maintains the predetermined voltage differential to provide a well regulated output voltage to the load despite fluctuations in supply voltage. This "following" action limits the heat dissipation and protects the FET. Because the voltage regulator uses no inductors or transformers, there are no saturation problems and the circuit may be compactly packaged. No switching spikes are produced to cause video interference, and due to suppression of ripple current by the voltage regulator, there is little conducted electromagnetic interference (EMI).

However, again this known document do not disclose nor suggest the advantageous characteristic features of the present invention as mentioned above.

In a preferred characterizing embodiment of the present invention, said active regulation device is a N-channel MOSFET of which the first main terminal is the drain and the second main terminal is the source.

In this preferred embodiment of the present invention, an auxiliary voltage supply is connected to said filter output terminal.

This auxiliary voltage supply is the supply voltage for the operational amplifier of the OPAMP controller circuit.

In a variant characterizing embodiment of the present invention, said active regulation device is a P-channel MOSFET of which the first main terminal is the source and the second main terminal is the drain, and said OPAMP controller circuit comprises an operational amplifier having said first regulation input connected to said filter output terminal, a second regulation input connected to said attenuation output terminal via a third resistor, and said amplifier output connected back to said second regulation input via the series connection of a second resistor and a first capacitor.

In this case of the auxiliary voltage supply being connected to the ground, an external voltage supply is no longer needed and the supply voltage for the operational amplifier of the OPAMP controller circuit is the voltage at the filter input terminal.

Also another characterizing embodiment of the present invention is that said floating reference voltage circuit comprises a reference element, preferably a bandgap device or a Zener diode, having a cathode connected to said filter input terminal and an anode connected to said ground terminal via a third resistor, the first junction point between said anode and said third resistor being connected to said filter input terminal via the series connection of a fourth and a fifth resistors of which the second junction point is said attenuation output terminal.

The resistor divider constituted by the fourth and fifth resistor provides a suitable reference input - the voltage across the reference element REF divided down - for defining the above-mentioned proportional-integral characteristic of the OPAMP controller circuit.

Still another characterizing embodiment of the present invention is that a second capacitor is provided between said attenuation output terminal and said ground terminal.

The main idea is to use a high precision floating reference, avoiding any tolerance issues which would apply to circuitries referred to the ground terminal. Only the second capacitor needs to be connected to the ground terminal, necessary for filtering the floating reference voltage.

Further characterizing embodiments of the present active filter for a DC power supply are mentioned in the appended claims.

It is to be noticed that the term 'comprising', used in the claims, should not be interpreted as being restricted to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

The above and other objects and features of the invention will become more apparent and the invention itself will be best understood by referring to the following description of an embodiment taken in conjunction with the accompanying drawings wherein:
Fig. 1 shows an active filter for a DC power supply according to the invention,
Figs. 2 to 5 show different signals characteristics measured inside the of the active filter of Fig. 1; and
Fig. 6 shows a variant of the active filter of Fig. 1.

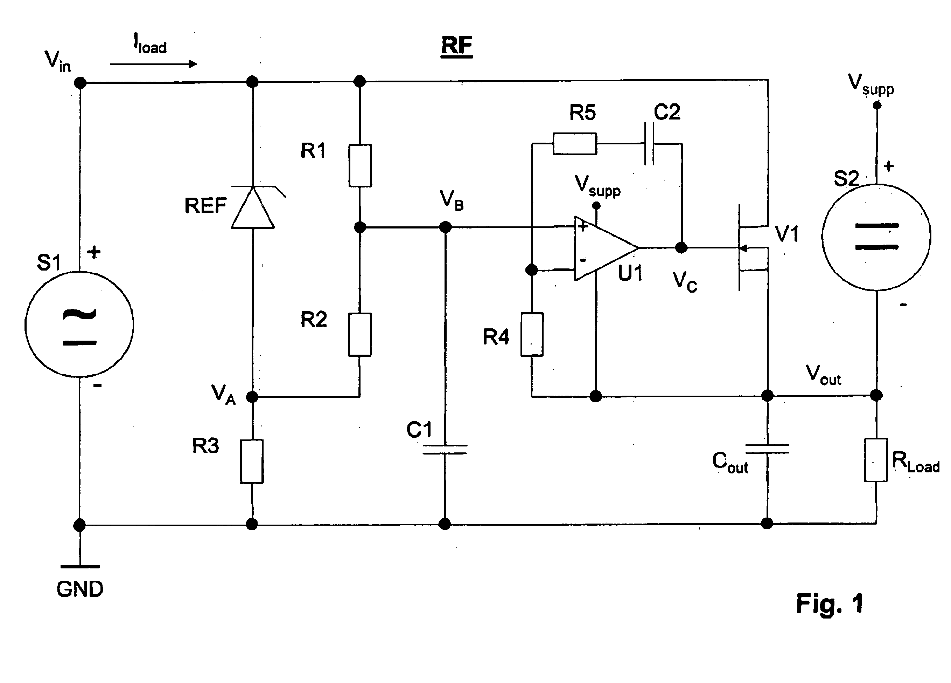

The active filter RF shown at Fig. 1 in conjunction with a high efficient DC to DC converter is used for the supply of a 900MHz power amplifier for telecommunication base stations. The active filter is able to follow the change of the output voltage of a DC power supply S1 connected thereto in short time frame from 18V to 32V and back again. The required power is in the 250W range, which means a needed current of around 8A @ 32V. The ripple and noise at the output is maximum -70dBc.

The DC power supply S1 is preferably a Switch Mode Power Supply SMPS of which a positive supply output terminal + is connected to a filter input terminal Vin of the active filter RF and a negative supply output terminal - is connected to a ground terminal GND of the active filter RF. The power supply S1 is a DC source with superimposed ripple and noise to be filtered out by the active filter RF.

The active filter RF further comprises a floating reference voltage circuit that is composed of a reference element REF and three resistors R1, R2 and R3. The reference element REF is for instance a Zener diode (shown at Fig. 1 for simplicity), a bandgap, a dedicated IC or any other highly accurate reference element. The Zener diode REF has its cathode connected to the filter input terminal Vin and its anode connected to the ground terminal GND via resistor R3. The junction point V_{A} between the anode of REF and resistor R3 is connected to the filter input terminal Vin via the series connection of the two resistors R1 and R2.

Resistor R3 provides biasing current for the reference element REF as well as for the resistor divider R1, R2. The junction point between the latter resistors R1 and R2 is an attenuation output terminal V_{B} connected to a first regulation input or non-inverting input + of an operational amplifier (OPAMP) U1. The second regulation input or inverting input of the operational amplifier U1 is connected to a filter output terminal Vout of the active filter RF via a resistor R4, and the amplifier output Vc of U1 is connected back to its second regulation input - via the series connection of a resistor R5 and a capacitor C2. Although other compensation circuitries are possible, the components R4, R5 and C2 define the proportional-integral characteristic of the OPAMP controller circuit comprising the operational amplifier U1 and for which the resistor divider R1, R2 provides a suitable reference input (the voltage across the reference element REF divided down). Indeed, the attenuation output terminal V_{B} is at a reference input voltage for U1 that is floating by a value defined by the voltage across the reference element REF and the divider R1, R2 below the voltage Vin at the like-named filter input terminal. Furthermore, the operational amplifier U1 has a bandwidth high enough to filter out superimposed ripple and noise. In this way, the reference element REF describes a basic floating reference voltage for the operational amplifier U1. The voltage divider R1/R2 is used for "fine tuning" of the usually needed very low actual reference voltage.

Resistors R4 with R5 set the proportional part of the control loop of OPAMP U1, whereas capacitor C2 with resistor R5 set the integration constant.

A capacitor C1 is further preferably provided between the attenuation output terminal V_{B} and ground terminal GND of the active filter RF. The capacitor C1 forms, with resistor R1 parallel R2, a low pass element and defines the maximum possible "damping" of the circuitry. In other words, capacitor C1 with R1 parallel R2 set the pole for the chosen attenuation and the resulting voltage acts as reference for the operational amplifier U1.

The amplifier output Vc of the operational amplifier U1 is connected to the gate of an active regulation device V1. V1 is a pass element, preferably a N-channel MOSFET, controlled by the operational amplifier U1 and able to handle the incoming current I_{load} at the filter input terminal Vin as well as associated losses. To this end, the MOSFET V1 has its drain coupled connected to the filter input terminal Vin and its source connected to a filter output terminal Vout at which a load R_{Load} is connected. The other terminal of the active filter's load R_{Load} is connected to the ground terminal GND.

The operational amplifier U1 controls the gate of MOSFET V1 in a way to filter out ripple and noise to a value defined by R1, R2 and C1, whereby the DC voltage drop is very well defined, especially when a high accuracy reference element REF is used.

Preferably, a capacitor Cout is connected between the filter output terminal Vout and the ground terminal GND. This capacitor Cout may be needed to guarantee stability of the circuitry, but could be also the capacitor(s) at the load.

Finally, an auxiliary "floating" voltage supply S2 providing a supply voltage Vsupp is connected to the filter output terminal Vout. This voltage supply V2 is used to feed the operational amplifier U1 with respect to the filter output terminal Vout. The voltage supply V2 is normally in the 5V range and provides a few mA of current.

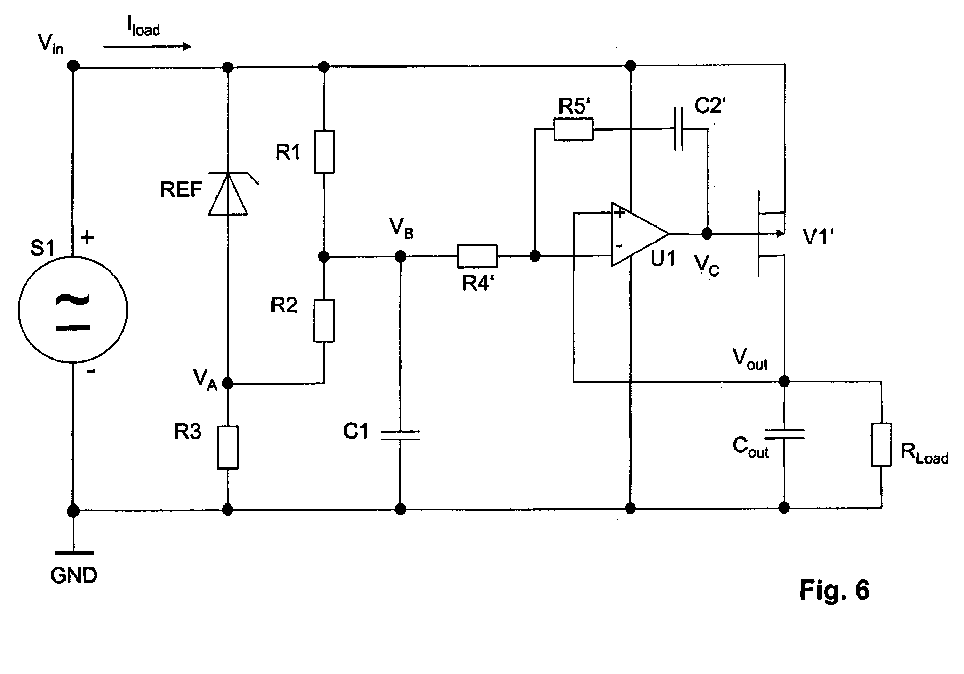

When using the N-channel MOSFET V1 as pass element, the supply voltage Vsupp for the operational amplifier U1 needs to be higher than the output voltage at the filter output terminal Vout. An easy way to generate the supply voltage Vsupp is to use a current regulative diode in series with a Zener diode for this purpose when a higher voltage is available inside the system. If no higher voltage is available, a small charge pump to generate the supply voltage Vsupp or a P-channel FET as actuator MOSFET V1' could be used. This possible variant of the present active filter RF is shown at Fig. 6 and will be described in more detail later.

The present embodiment uses a kind of "floating Low Drop Out regulator LDO" in series the output of the DC power supply S1 or Switch Mode Power Supply SMPS so preventing the efficiency losses caused by the tolerances of the power supply S1 and the "standard" LDO. Beside the just mentioned problems referring to a changing voltage Vin, a main principle of the active filter RF is not to use a ground referred reference but a floating reference voltage at the like-named reference terminal V_{A} res. V_{B}. So any value change or tolerances of the voltage Vin - at the like-named filter input terminal - to be filtered will not affect the filtering circuitry and the voltage drop remains constant.

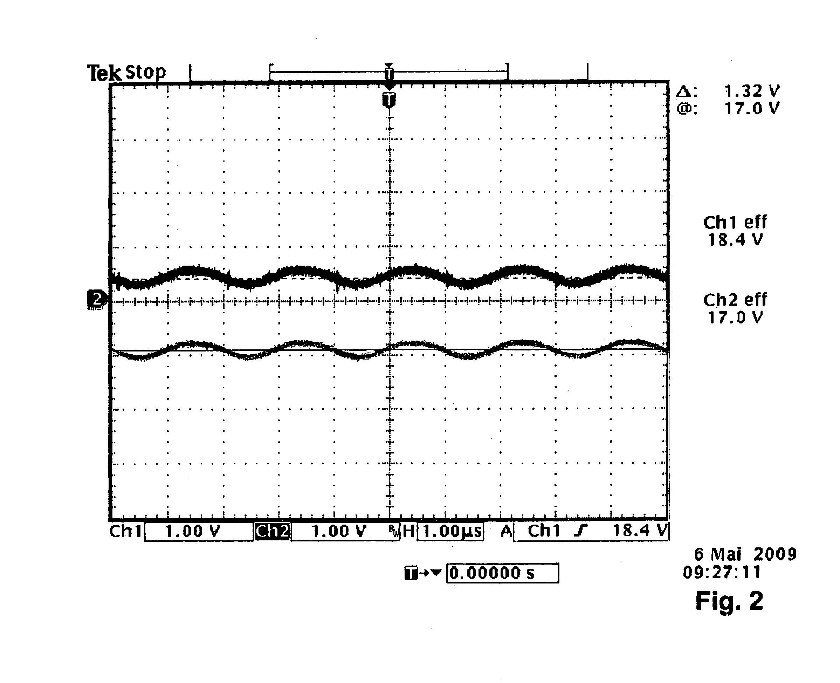

It is to be noted that the characteristics shown at Figs. 2, 3, 4 and 5 were taken with the output of the power supply set to around 18,4V. To improve visibility mostly an offset of 18V was added.

The upper curve at Fig. 2 shows the actual output voltage of the DC power supply S1 at the filter input terminal Vin with around 318mVₚₚ ripple and noise superimposed, i.e. without additional filtering, whilst the lower curve shows the shifted reference voltage V_{A} at the like-named junction point between the reference element REF and resistor R3 according to the embodiment shown at Fig.1.

In this application, a TLV 431 is used as reference element REF with a reference voltage of 1.24V.

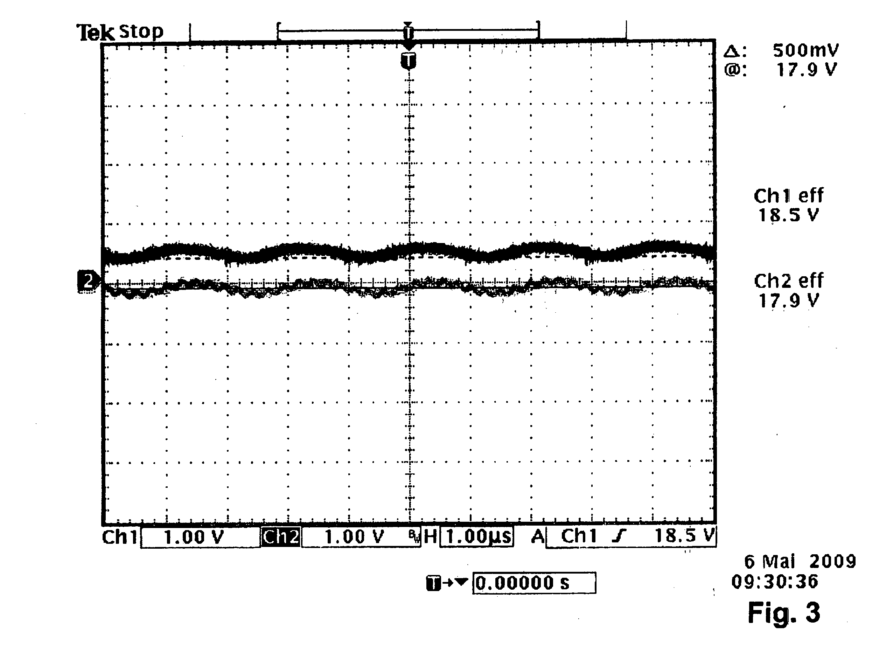

The upper curve at Fig. 3 also shows the unfiltered output of the DC power supply S1, whilst the lower curve shows the divided down voltage V_{B} at the like-named attenuation output terminal as obtained by the resistor divider R1, R2. The divided down voltage V_{B} at the attenuation output terminal is also the reference input voltage of the operational amplifier U1, here chosen to be around -0,45V (referred to Vin). Also capacitor C1 was removed from the active filter providing the lower curve shown at Fig. 3. It is finally to be noted that for relative low load currents, the MOSFET V1 may be replaced by a transistor.

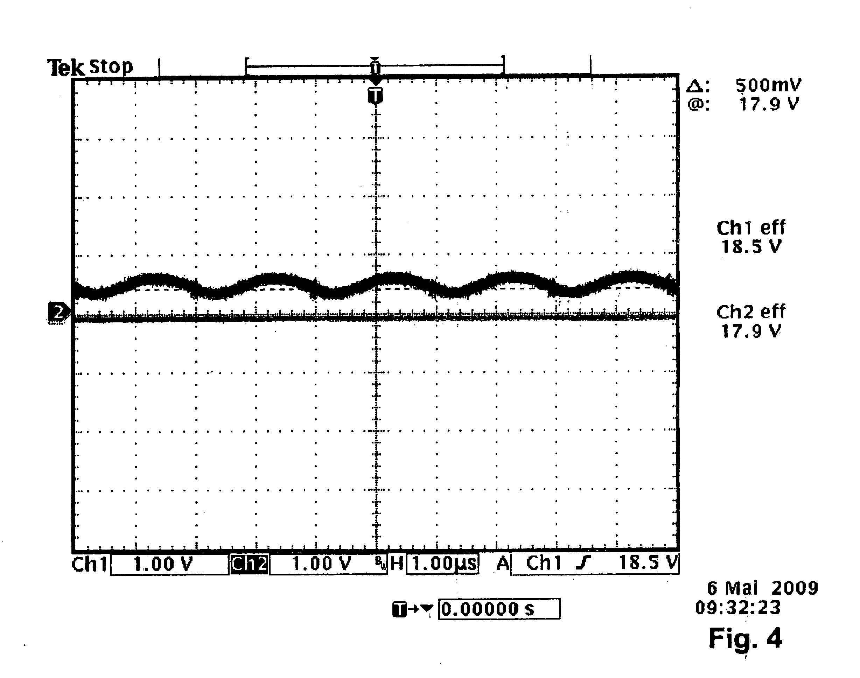

Adding up capacitor C1 provides the required filtering as represented by the lower curve at Fig. 4. The filter time constant is given by R1 parallel R2 times C1 and has to be chosen according the filtering requirements. Here, a pole set to around 30kHz causes about -25dB damping of the original ripple (500kHz fundamental).

As mentioned earlier, the divided down voltage V_{B} at the like-named attenuation output terminal is the reference input voltage for the operational amplifier U1 and, as any OPAMP, U1 will try to set its output accordingly to achieve equal voltages at both of its non-inverting + and inverting - inputs.

To be able to deliver the high required currents, e.g. of 8A, the "help" of MOSFET V1 is needed. So the operational amplifier U1 will adjust dynamically its output to have at its inverting input - the same voltage as at its non-inverting input +, i.e. in this case the filtered voltage Vin - 0.45V. The total loop is closed via resistor R4.

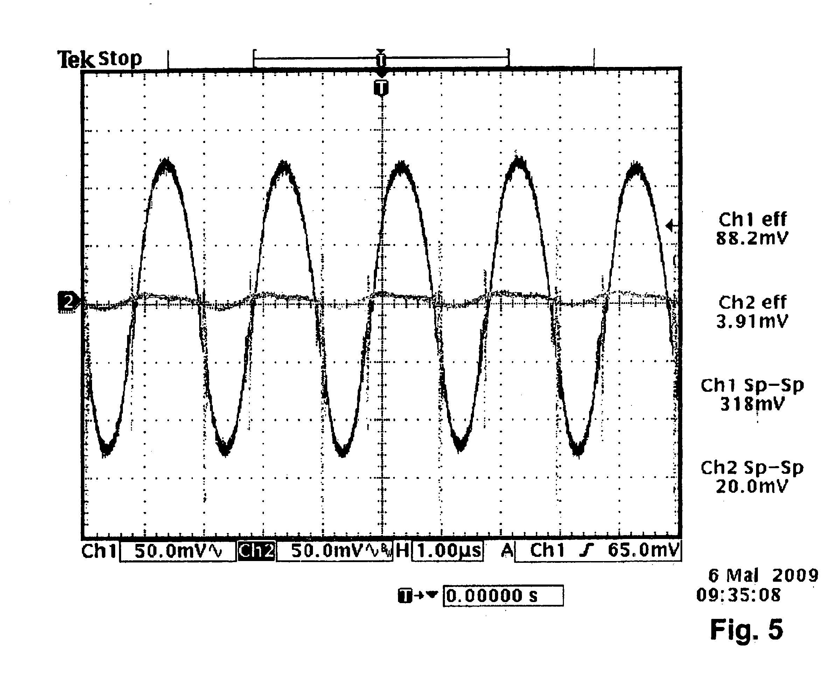

The upper curve at Fig. 5 again shows the unfiltered output of the DC power supply S1, i.e. the input voltage comprising superimposed ripple and noise at the filter input terminal Vin, whilst the lower curve shows the filtered output voltage Vout at the like-named filter output terminal.

In more detail, the voltage drop across drain and source of MOSFET V1 is set to 0.45V_{eff} which equals an efficiency loss of 2.5% referred to 18V and only 1.4% referred to 32V as input voltage. Compared to the > 6% losses of a linear regulator mentioned above, this represent a big advantage, despite the additional problem not having a fixed voltage here.

As already mentioned, the components R5 and C2 (with R4) set the proportional- integral characteristic of the controller circuitry (inner loop) and need to be adjusted according the requirements and to guarantee stability. Eventually an additional low pass is required across output and the inverting input - of the operational amplifier U1.

It is to be noted that due to the use of N-channel MOSFET V1 a higher voltage than Vin is required to switch this MOSFET "on". So, the supply voltage for the operational amplifier U1 needs to be higher than the input voltage Vin (drawn voltage source S2 floating on Vout). For the given application this voltage could be generated easily. However, an alternative could be to replace the N-channel MOSFET V1 by a P-channel type and thereby removing S2.

This alternative is shown at Fig. 6 where the active regulation device V1' is then a P-channel MOSFET of which the first main terminal is the source which is connected to the filter input terminal Vin, and the second main terminal is the drain which is connected to the filter output terminal Vout.

The OPAMP controller circuit of Fig. 6 still comprises an operational amplifier U1 but having its first regulation input or non-inverting input + connected to the filter output terminal Vout, its second regulation input or inverting input - connected to the attenuation output terminal V_{B} via a resistor R4', and its amplifier output Vc connected back to its inverting input - via the series connection of resistor R5 and capacitor C2. The operational amplifier U1 is now fed via connections to the filter input terminal Vin and to the ground terminal.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is merely made by way of example and not as a limitation on the scope of the invention, as defined in the appended claims.

## Claims

1. An active filter (RF) for a DC power supply (S1),
said active filter (RF) having a filter input terminal (Vin) coupled to an output of said DC power supply (S1) and comprising an active regulation device (V1) having main terminals coupled between said filter input terminal and a filter output terminal (Vout) of said active filter,
said active filter (RF) having said filter input terminal (Vin) and a ground terminal (GND) across which said DC power supply (S1) is connected,
said active regulation device (V1) being adapted to be controlled by an OPAMP controller circuit (U1, R4, R5, C2) comprising an operational amplifier (U1) having a first regulation input (+) connected to an attenuation output terminal (V_{B}) of a floating reference voltage circuit (REF, R1, R2, R3), and having a second regulation input (-) connected to said filter output terminal (Vout) via a first resistor (R4),
said active regulation device (V1) being a MOSFET having a first main terminal coupled connected to said filter input terminal (Vin), a second main terminal connected to said filter output terminal (Vout), and a gate connected to an amplifier output (V_{C}) of said OPAMP controller circuit (U1, R4, R5, C2),
and said floating reference voltage circuit having an attenuation input terminal coupled to said filter input terminal and being adapted to provide a control voltage at said attenuation output terminal for said OPAMP controller circuit,
***characterized in that*** said amplifier output (V_{C}) of said operational amplifier (U1) of said OPAMP controller circuit (U1, R4, R5, C2) is connected back to said second regulation input (-) via the series connection of a second resistor (R5) and a first capacitor (C2).

2. The active filter according to claim **1**, ***characterized in that*** said active regulation device (V1) is a N-channel MOSFET of which the first main terminal is the drain and the second main terminal is the source.

3. The active filter according to claim **2**, ***characterized in that*** an auxiliary voltage supply (S2) is connected to said filter output terminal (Vout).

4. The active filter according to claim **2**, ***characterized in that*** said operational amplifier (U1) is fed via connections to an auxiliary supply terminal (Vsupp) and to said filter output terminal (Vout).

5. The active filter according to claim **1**,
***characterized in that*** said active regulation device (V1') is a P-channel MOSFET of which the first main terminal is the source and the second main terminal is the drain,
*and **in that*** said OPAMP controller circuit (U1, R4', R5', C2') comprises an operational amplifier (U1) having said first regulation input (+) connected to said filter output terminal (Vout), a second regulation input (-) connected to said attenuation output terminal (V_{B}) via a third resistor (R4'), and said amplifier output (V_{C}) connected back to said second regulation input (-) via the series connection of a second resistor (R5) and a first capacitor (C2).

6. The active filter according to claim **5**, ***characterized in that*** said operational amplifier (U1) is fed via connections to said filter input terminal (Vin) and to said ground terminal.

7. The active filter according to claim **1**, ***characterized in that*** said floating reference voltage circuit (REF, R1, R2, R3) comprises a reference element (REF) having a cathode connected to said filter input terminal (Vin) and an anode connected to said ground terminal (GND) via a third resistor (R3), the first junction point (V_{A}) between said anode and said third resistor (R3) being connected to said filter input terminal (Vin) via the series connection of a fourth (R1) and a fifth (R2) resistors of which the second junction point is said attenuation output terminal (V_{B}).

8. The active filter according to claim **7**, ***characterized in that*** said reference element (REF) is a bandgap device.

9. The active filter according to claim **7**, ***characterized in that*** said reference element (REF) is a Zener diode.

10. The active filter according to claim **1**, ***characterized in that*** a second capacitor (C1) is provided between said attenuation output terminal (V_{B}) and said ground terminal (GND).

11. The active filter according to claim **1**, ***characterized in that*** a load (R_{Load}) is connected between said filter output terminal (Vout) and said ground terminal (GND).

12. The active filter according to claim **1, *characterized in that*** said DC power supply (S1) is a Switch Mode Power Supply SMPS.

## Patentansprüche

1. Aktivfilter (RF) für eine Gleichstromversorgung (S1),
wobei der besagte Aktivfilter (RF) einen Filtereingangsanschluss (Vin) aufweist, welcher an einen Ausgang der besagten Gleichstromversorgung (S1) gekoppelt ist, und eine aktive Regelvorrichtung (V1) umfasst, welche Hauptanschlüsse aufweist, die zwischen dem besagten Filtereingangsanschluss und einem Filterausgangsanschluss (Vout) des besagten Aktivfilters gekoppelt sind,
wobei der besagte Aktivfilter (RF) den besagten Filtereingangsanschluss (Vin) und einen Erdungsanschluss (GND), über welchen die besagte Gleichstromversorgung (S1) angeschlossen ist, aufweist,
wobei die besagte aktive Regelvorrichtung (V1) für die Steuerung durch eine OPAMP-Reglerschaltung (U1, R4, R5, C2) ausgelegt ist, welche einen Operationsverstärker (U1) mit einem ersten Regelungseingang (+), der an einen Dämpfungsausgangsanschluss (V_{B}) einer Referenzschwebespannungsschaltung (REF, R1, R2, R3) angeschlossen ist, und einem zweiten Regelungseingang (-), der über einen ersten Widerstand (R4) an den besagten Filterausgangsanschluss (Vout) angeschlossen ist, umfasst,
wobei die besagte aktive Regelvorrichtung (V1) ein MOSFET mit einem ersten Hauptanschluss, welcher an den besagten Filtereingangsanschluss (Vin) angeschlossen ist, einem zweiten Hauptanschluss, welcher an den besagten Filterausgangsanschluss (Vout) angeschlossen ist, und einem Gate, welches an einen Verstärkerausgang (V_{C}) der besagten OPAMP-Reglerschaltung (U1, R4, R5, C2) angeschlossen ist, ist,
und wobei die besagte Referenzschwebespannungsschaltung einen Dämpfungseingangsanschluss aufweist, welcher an den besagten Filtereingangsanschluss gekoppelt und für das Bereitstellen einer Steuerspannung an dem besagten Dämpfungsausgangsanschluss für die besagte OPAMP-Reglerschaltung ausgelegt ist,
***dadurch gekennzeichnet, dass*** der besagte Verstärkerausgang (V_{C}) des besagten Operationsverstärkers (U1) der besagten OPAMP-Reglerschaltung (U1, R4, R5, C2) über die Serienverbindung eines zweiten Widerstands (R5) und eines ersten Kondensators (C2) zurück zu dem besagten zweiten Regelungseingang (-) verbunden ist.

2. Aktivfilter nach Anspruch **1**, **dadurch gekennzeichnet, dass** die besagte aktive Regelvorrichtung (V1) ein N-Kanal-MOSFET ist, dessen erster Hauptanschluss der Drain und dessen zweiter Hauptanschluss die Quelle ist.

3. Aktivfilter nach Anspruch **2**, ***dadurch gekennzeichnet, dass*** eine Hilfsstromversorgung (S2) an den besagten Filterausgangsanschluss (Vout) angeschlossen ist.

4. Aktivfilter nach Anspruch **2**, ***dadurch gekennzeichnet, dass*** der besagte Operationsverstärker (U1) über Verbindungen zu einem Hilfsversorgungsanschluss (Vsupp) und zu dem besagten Filterausgangsanschluss (Vout) versorgt wird.

5. Aktivfilter nach Anspruch **1**,
***dadurch gekennzeichnet, dass*** die besagte aktive Regelvorrichtung (V1') ein P-Kanal-MOSFET ist, dessen erster Hauptanschluss die Quelle und dessen zweiter Hauptanschluss der Drain ist,
*und dass* die besagte OPAMP-Reglerschaltung (U1, R4', R5', C2') einen Operationsverstärker (U1) umfasst, dessen besagter erster Regelungseingang (+) an den besagten Filterausgangsanschluss (Vout) angeschlossen und ein zweiter Regelungseingang (-) über einen dritten Widerstand (R4') an den besagten Dämpfungsausgangsanschluss (V_{B}) angeschlossen ist, und wobei der besagte Verstärkerausgang (V_{C}) über die Serienverbindung eines zweiten Widerstands (R5) und eines ersten Kondensators (C2) zurück zu dem besagten zweiten Regelungseingang (-) verbunden ist.

6. Aktivfilter nach Anspruch **5**, ***dadurch gekennzeichnet, dass*** der besagte Operationsverstärker (U1) über Verbindungen zu dem besagten Filtereingangsanschluss (Vin) und dem besagten Erdungsanschluss versorgt wird.

7. Aktivfilter nach Anspruch **1**, ***dadurch gekennzeichnet, dass*** die besagte Referenzschwebespannungsschaltung (REF, R1, R2, R3) ein Referenzelement (REF) umfasst, welches eine Kathode, die an den besagten Filtereingangsanschluss (Vin) angeschlossen ist, und eine Anode, welche über einen dritten Widerstand (R3) an den besagten Erdungsanschluss (GND) angeschlossen ist, aufweist, wobei der erste Verbindungspunkt (V_{A}) zwischen der besagten Anode und dem besagten dritten Wiederstand (R3) über eine Serienverbindung eines vierten (R1) und eines fünften (R2) Widerstands, deren zweiter Verbindungspunkt der besagte Dämpfungsausgangsanschluss (V_{B}) ist, an den besagten Filtereingangsanschluss (Vin) angeschlossen ist.

8. Aktivfilter nach Anspruch **7**, **dadurch gekennzeichnet, dass** das besagte Referenzelement (REF) eine Bandlückenvorrichtung ist.

9. Aktivfilter nach Anspruch **7**, **dadurch gekennzeichnet, dass** das besagte Referenzelement (REF) eine Zener-Diode ist.

10. Aktivfilter nach Anspruch **1**, **dadurch gekennzeichnet, dass** ein zweiter Kondensator (C1) zwischen dem besagten Dämpfungsausgangsanschluss (V_{B}) und dem besagten Erdungsanschluss (GND) vorgesehen ist.

11. Aktivfilter nach Anspruch **1**, **dadurch gekennzeichnet, dass** eine Last (R_{Load}) zwischen dem besagten Filterausgangsanschluss (Vout) und dem besagten Erdungsanschluss (GND) angeschlossen ist.

12. Aktivfilter nach Anspruch **1**, **dadurch gekennzeichnet, dass** die besagte Gleichstromversorgung (S1) ein Schaltnetzteil SMPS ist.

## Revendications

1. Filtre actif (RF) pour une alimentation électrique CC (S1),
ledit filtre actif (RF) ayant une borne d'entrée de filtre (Vin) couplée à une sortie de ladite alimentation électrique CC (S1) et comprenant un dispositif de régulation active (V1) ayant des bornes principales couplées entre ladite borne d'entrée de filtre et une borne de sortie de filtre (Vout) dudit filtre actif,
ledit filtre actif (RF) ayant ladite borne d'entrée de filtre (Vin) et une borne de terre (GND) auxquelles ladite alimentation électrique CC (S1) est connectée,
ledit dispositif de régulation active (V1) étant adapté pour être commandé par un circuit de commande OPAMP (U1, R4, R5, C2) comprenant un amplificateur opérationnel (U1) ayant une première entrée de régulation (+) connectée à une borne de sortie d'atténuation (V_{B}) d'un circuit de tension de référence flottante (REF, R1, R2, R3), et ayant une deuxième entrée de régulation (-) connectée à ladite borne de sortie de filtre (Vout) par l'intermédiaire d'une première résistance (R4),
ledit dispositif de régulation active (V1) étant un MOSFET ayant une première borne principale couplée connectée à ladite borne d'entrée de filtre (Vin), une deuxième borne principale connectée à ladite borne de sortie de filtre (Vout), et une grille connectée à une sortie d'amplificateur (V_{C}) dudit circuit de commande OPAMP (U1, R4, R5, C2),
et ledit circuit de tension de référence flottante ayant une borne d'entrée d'atténuation couplée à ladite borne d'entrée de filtre et étant adapté pour fournir une tension de commande à ladite borne de sortie d'atténuation pour ledit circuit de commande OPAMP,
***caractérisé en ce que*** ladite sortie d'amplificateur (V_{C}) dudit amplificateur opérationnel (U1) dudit circuit de commande OPAMP (U1, R4, R5, C2) est connectée en retour à ladite deuxième entrée de régulation (-) par l'intermédiaire de la connexion en série d'une deuxième résistance (R5) et d'un premier condensateur (C2).

2. Filtre actif selon la revendication **1**, ***caractérisé en ce que*** ledit dispositif de régulation active (V1) est un MOSFET à canal N dont la première borne principale est le drain et la deuxième borne principale est la source.

3. Filtre actif selon la revendication **2**, ***caractérisé en ce qu'**une* alimentation en tension auxiliaire (S2) est connectée à ladite borne de sortie de filtre (Vout).

4. Filtre actif selon la revendication **2**, ***caractérisé en ce que*** ledit amplificateur opérationnel (U1) est alimenté par l'intermédiaire de connexions vers une borne d'alimentation auxiliaire (Vsupp) et vers ladite borne de sortie de filtre (Vout).

5. Filtre actif selon la revendication **1**,
***caractérisé en ce que*** ledit dispositif de régulation active (V1') est un MOSFET à canal P dont la première borne principale est la source et la deuxième borne principale est le drain,
*et **en ce que** ledit* circuit de commande OPAMP (U1, R4', R5', C2') comprend un amplificateur opérationnel (U1) ayant ladite première entrée de régulation (+) connectée à ladite borne de sortie de filtre (Vout), une deuxième entrée de régulation (-) connectée à ladite borne de sortie d'atténuation (V_{B}) par l'intermédiaire d'une troisième résistance (R4'), et ladite sortie d'amplificateur (V_{C}) connectée en retour à ladite deuxième entrée de régulation (-) par l'intermédiaire de la connexion en série d'une deuxième résistance (R5) et d'un premier condensateur (C2).

6. Filtre actif selon la revendication **5**, ***caractérisé en ce que*** ledit amplificateur opérationnel (U1) est alimenté par l'intermédiaire de connexions vers ladite borne d'entrée de filtre (Vin) et vers ladite borne de terre.

7. Filtre actif selon la revendication **1**, ***caractérisé en ce que*** ledit circuit de tension de référence flottante (REF, R1, R2, R3) comprend un élément de référence (REF) ayant une cathode connectée à ladite borne d'entrée de filtre (Vin) et une anode connectée à ladite borne de terre (GND) par l'intermédiaire d'une troisième résistance (R3), le premier point de jonction (V_{A}) entre ladite anode et ladite troisième résistance (R3) étant connecté à ladite borne d'entrée de filtre (Vin) par l'intermédiaire de la connexion en série d'une quatrième résistance (R1) et d'une cinquième résistance (R2) dont le deuxième point de jonction est ladite borne de sortie d'atténuation (V_{B}).

8. Filtre actif selon la revendication **7**, ***caractérisé en ce que*** ledit élément de référence (REF) est un dispositif à bande interdite.

9. Filtre actif selon la revendication **7**, ***caractérisé en ce que*** ledit élément de référence (REF) est une diode Zener.

10. Filtre actif selon la revendication **1**, ***caractérisé en ce qu'**un* deuxième condensateur (C1) est prévu entre ladite borne de sortie d'atténuation (V_{B}) et ladite borne de terre (GND).

11. Filtre actif selon la revendication **1**, ***caractérisé en ce qu'**une* charge (R_{Load}) est connectée entre ladite borne de sortie de filtre (Vout) et ladite borne de terre (GND).

12. Filtre actif selon la revendication **1**, ***caractérisé en ce que*** ladite alimentation électrique CC (S1) est une alimentation électrique à mode de commutation SMPS.
